Europäisches Patentamt

European Patent Office

Office européen des brevets

(11) Publication number: **0 539 956 A1**

# EUROPEAN PATENT APPLICATION

(21) Application number: **92118440.4**

(22) Date of filing: **28.10.92**

(51) Int. Cl.5: **H01P 5/08**

(30) Priority: **31.10.91 US 785716**

(43) Date of publication of application:
**05.05.93 Bulletin 93/18**

(84) Designated Contracting States:
**CH DE ES FR GB IT LI SE**

(71) Applicant: **Hughes Aircraft Company**
**7200 Hughes Terrace P.O. Box 45066**
**Los Angeles, California 90045–0066(US)**

(72) Inventor: **Holter, Clinton O.**
**4028 East 19th Street**
**Long Beach, CA 90804(US)**
Inventor: **Allison, Robert C.**
**6910 Larkvale Drive**
**Rancho Palos Verdes, CA 90274(US)**

(74) Representative: **KUHNEN, WACKER &**
**PARTNER**
**Alois–Steinecker–Strasse 22 Postfach 1553**
**W–8050 Freising (DE)**

(54) Coaxial to microstrip transition.

(57) A coaxial–to–microstrip transition device is characterized in that the center conductor pin (52) does not extend beyond the housing wall (68) adjacent the microstrip circuit (54), and the connection between the pin and microstrip conductor is made by a short gold ribbon (60). Advantages of the transition device include ease of assembly and improved VSWR performance.

FIG.2

## BACKGROUND OF THE INVENTION

The present invention relates to RF devices, and more particularly to an improved transition structure for transitioning between a coaxial transmission line and a microstrip transmission line.

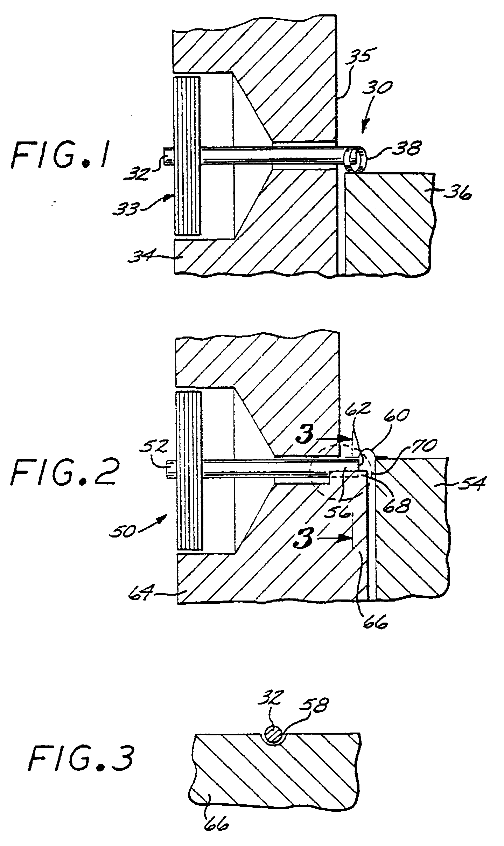

Most microstrip circuits which are placed in a housing require the use of an RF coaxial – to – microstrip connector or transition. A conventional coaxial – to – microstrip transition, as shown in FIG. 1, employs an RF feedthrough center conductor pin 32 which protrudes from a wall 35 of housing 34 over the area in which the microstrip circuit 36 is to be placed. An insulator support member 33 supports the pin 32 so that it does not make electrical contact with the housing 34. The microstrip circuit 36 is placed in the transition device 30 by sliding it under the pin 32. A long double wrapped loon 38 of gold ribbon with undesirable parasitic inductance is welded or bonded to the tip of the pin 32 and to the microstrip circuit conductor line. The inductance of the gold ribbon is often too large to be tuned out at the front of the microstrip circuit, and causes relatively high VSWR.

It is an object of the present invention to provide a coaxial – to – microstrip transition device which does not employ a protruding center pin so that the microstrip circuit can be dropped directly into the device.

A further object is to provide a coaxial – to – microstrip transition with improved VSWR performance.

## SUMMARY OF THE INVENTION

A coaxial – to – microstrip transition in accordance with the invention is characterized by low VSWR and ease of assembly. In one exemplary form, the transition comprises an electrically conductive housing having an opening formed therethrough, the housing comprising an extending shoulder formed in a housing wall adjacent the microstrip circuit. The shoulder has a groove formed in a surface therein in alignment with the opening.

The transition further includes an RF feedthrough pin extending through the housing opening and electrically isolated from the housing to form a coaxial transmission line. The pin extends into but is isolated from the groove to adjacent the edge of the shoulder, wherein the pin does not extend over the edge of the shoulder in the housing.

A short length of gold ribbon makes electrical contact between the pin and the conductor of the microstrip circuit. A first end of the ribbon is bonded to the pin adjacent the pin end. A second end of the ribbon is bonded to the microstrip conductor ribbon adjacent the edge of the microstrip circuit.

Assembly of the transition to said microstrip circuit is facilitated in that the feedthrough pin does not extend over the housing shoulder, and good VSWR performance is obtained as a result of the short length of gold ribbon used to electrically connect the feedthrough pin to the microstrip conductor.

## BRIEF DESCRIPTION OF THE DRAWING

These and other features and advantages of the present invention will become more apparent from the following detailed description of an exemplary embodiment thereof, as illustrated in the accompanying drawings, in which:

FIG. 1 is a simplified cross – sectional diagram illustrating a conventional coaxial – to – microstrip transi – tion.

FIG. 2 is a cross – sectional view illustrating a coaxial – to – microstrip transition embodying the present invention.

FIG. 3 is a crass – sectional view taken along line 3 – 3 of FIG. 2.

## DETAILED DESCRIPTION OF THE PREFERRED EMBODIMENT

FIG. 2 illustrates a coaxial – to – microstrip transition structure in accordance with the invention. In this device 50, the housing 64 does not present to the microstrip circuit a surface which lies in a single plane, as in the conventional transition. Instead, the portion 66 of the housing below the feedthrough pin 52 protrudes outwardly to define a shoulder 68. As shown more clearly in the cross – sectional view of FIG. 3, a groove 58 is formed in the housing portion 66 to accept the region 56 of the pin 52. The feedthrough pin 52 does not extend over the microstrip circuit 54, but instead ends just before the edge of the microstrip circuit.

As described above, the metal housing 56 of the structure 50 in the area of the transition is relieved as shown in FIG. 3 in a semi – cylindrical fashion to form the rounded groove 58 or a radius selected to maintain the characteristic impedance of the transmission circuit at 50 ohms. A gold ribbon 60 has one end bonded to the top of the pin 52 adjacent the end 62 and the other end to the microstrip circuit conductor line. The ribbon 60 is of shorter length, say about .010 inches, than the ribbon loop used in the conventional transition, say about .040 inches. As a result, the inductance is reduced over the conventional transition. Moreover, the assembly of the transition to the microstrip circuit is facilitated, since the circuit 54 can be dropped straight down into the transition housing, instead of being slid under a protruding pin.

Approximating the circle region 70 as 1/2 coaxial line and 1/2 coplanar waveguide, an approximate formula for the impedance of the circle region has been obtained.

$$Z_O = \frac{377}{[(8/(((a_1/b_1)^4 - 3(a_1/b_1)^2 + 6)) + (\pi/\ln(b_1/a_1))]}$$

where $a_1$ represents the radius of the feedthrough pin 52 and $b_1$ represents the radius of the groove 58.

The above formula for impedance was derived by using $Z_O = \eta\epsilon/C_{total}$, and $C_{total} = (C_{coax})/2 + C_{coplanar}$, where $C_{total}$ represents the total capacitance of the transition region 56, $C_{coax}$ represents the capacitance of the coaxial (lower half) section of the transition region 56, and $C_{coplanar}$ represents the capacitance of the coplanar (upper half) section of transition region 56. This formula can be used for any diameter of RF feedthrough, and was used in the construction of a device with a 0.20" pin diameter, and .033 − .034" slot diameter. Such a transition exhibited a VSWR of less than 1.22:1 for the frequency range between 50 MHz and 12 GHz, and only slightly more than 1.22:1 for frequencies between 12 GHz and 20 GHz.

It is understood that the above − described embodiments are merely illustrative of the possible specific embodiments which may represent principles of the present invention. Other arrangements may readily be devised in accordance with these principles by those skilled in the art without departing from the scope and spirit of the invention.

**Claims**

1. A coaxial − to − microstrip transition comprising an electrically conductive housing, an RF feedthrough pin extending through an opening in said housing and electrically isolated therefrom to comprise a coaxial transmission circuit, and wherein a microstrip circuit is positioned adjacent a wall of said housing and electrical contact is made between said pin and the conductor line of said microstrip circuit, said transition characterized in that said wail of said housing forms a shoulder which is adjacent to said microstrip circuit, a rounded groove is formed in said shoulder to receive said pin, said pin does not extend over the edge or said housing shoulder, and wherein electrical contact is made between said pin and said microstrip conductor by a short length of electrically conductive ribbon bonded to the end of said pin and to said microstrip conductor.

2. The transition of Claim 1 wherein said coaxial transmission circuit is characterized by a coaxial characteristic impedance, said pin has a substantially circular cross − sectional configuration of a first radius $a_1$, said groove has a substantially semicircular cross − sectional configuration of a second radius $b_1$, and wherein said first and second radii are selected to provide a transition characteristic impedance which substantially matches said coaxial characteristic impedance.

3. The transition of Claim 2 wherein said transition characteristic impedance $Z_O$ and said first and second radii are related in accordance with the relationship:

$$Z_O = \frac{377}{[(8/(((a_1/b_1)^4 - 3(a_1/b_1)^2 + 6)) + (\pi/\ln(b_1/a_1))]}.$$

4. The transition of Claim 1 wherein said ribbon is a gold ribbon.

**5.** A coaxial – to – microstrip transition characterized by low VSWR and ease of assembly, comprising

an electrically conductive housing having an opening formed therethrough, said housing comprising an extending shoulder formed in a housing wail adjacent a microstrip circuit to which the transition is to be made, said shoulder having a groove formed in a surface therein in alignment with said opening;

an RF feedthrough pin extending through said housing opening and electrically isolated from said housing to form a coaxial transmission line, said pin extending into cut isolated from said groove to adjacent the edge of said shoulder, wherein said pin does not extend over the edge of said shoulder in said housing; and

a short length of gold ribbon for making electrical contact between said pin and the conductor of said microstrip circuit, a first end of said ribbon being bonded to said pin adjacent the pin end and a second end of said ribbon bonded to said microstrip conductor adjacent the edge of the microstrip circuit,

wherein assembly of the transition to said microstrip circuit is facilitated in that said feedthrough pin does not extend over the housing shoulder, and good VSWR performance is obtained as a result of the short length of gold ribbon used to electrically connect said feedthrough pin to said microstrip conductor.

**6.** The transition of Claim 5 wherein said coaxial transmission line is characterized by a coaxial characteristic impedance, said feedthrough pin has a circular cross – section of a first radius $a_1$, said groove has a circular cross – sectional configuration of a second radius $b_1$, and wherein said first and second radii are selected to provide a transition characteristic impedance which substantially matches said coaxial characteristic impedance.

**7.** The transition of Claim 6 wherein said transition characteristic impedance Z0 and said first and second radii are related by the relationship:

$$Z_0 = \frac{377}{[(8/(((a_1/b_1)^4 - 3(a_1/b_1)^2 \div 6)) + (\pi/\ln(b_1/a_1)))]} \cdot$$

4

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 611 186 (ZIEGNER) * the whole document * | 1,2,4-6 | H01P5/08 |
| Y | | 3,7 | |
| Y | IEE PROCEEDINGS H. MICROWAVES, ANTENNAS & PROPAGATION vol. 123, no. 10, October 1976, STEVENAGE GB pages 981 - 983 K.M. KEEN 'Characteristic impedance of dielectric-filled slotted coaxial transmission line' * page 982, left column, line 15 - line 22; figure 1 * | 3,7 | |
| A | GB-A-2 193 848 (RAYTHEON COMP) * the whole document * | 1,4,5 | |
| A | US-A-4 656 441 (TAKAHASHI ET AL.) * column 2, line 52 - column 3, line 8; figures 2-4 * | 1,5 | |

TECHNICAL FIELDS SEARCHED (Int. Cl.5)

H01P

The present search report has been drawn up for all claims

| Place of search | Date of completion of the search | Examiner |
|---|---|---|
| THE HAGUE | 08 DECEMBER 1992 | DEN OTTER A.M. |

EPO FORM 1503 03.82 (P0401)